# EUROPÄISCHE PATENTSCHRIFT

(11) **EP 0 627 104 B1**
(45) Veröffentlichungstag und Bekanntmachung des Hinweises auf die Patenterteilung: **14.03.2001**
(21) Anmeldenummer: 94903838.4
(22) Anmeldetag: 20.12.1993
(51) Int. Cl.: G06K 7/06, G06K 7/015

(54) **KONTAKTIEREINRICHTUNG FÜR EINE CHIPKARTE**
CONTACTING DEVICE FOR A CHIP CARD
DISPOSITIF DE MISE EN CONTACT POUR UNE CARTE A PUCE

(30) Priorität: 18.12.1992 DE 4243076
(43) Veröffentlichungstag der Anmeldung: 07.12.1994
(73) Patentinhaber: AMPHENOL-TUCHEL ELECTRONICS GmbH, D-74080 Heilbronn (DE)
(72) Erfinder: BRAUN, Gerhard, D-74235 Erlenbach (DE)
(74) Vertreter: Wagner, Karl H., Dipl.-Ing.
(86) Internationale Anmeldenummer: EP9303618
(87) Internationale Veröffentlichungsnummer: WO9415313

(56) Entgegenhaltungen:
- EP-A- 0 402 504
- EP-A- 0 444 396
- DE-A- 4 029 576
- US-A- 5 012 078

## Beschreibung

Die Erfindung bezieht sich auf eine Kontaktiereinrichtung für eine Chipkarte, und zwar insbesondere eine SIM-Karte. SIM-Karten sind bekanntlich spezielle Chipkarten, die kleiner sind als die herkömmlichen Chipkarten und die beispielsweise Auskunft über einen Telefonteilnehmer geben. Daher der Name "SIM"-Karte, wobei SIM "Subscriber Identity Module" bedeutet.

Kontaktiereinrichtung sind z. B. aus DE 41 18 312 A1, DE 40 29 576 A1, DE 40 08 655 A1 und DE 40 30 196 bekannt.

Insbesondere zeigt DE-A-41 18 312 A1 einen Kontaktsatz für eine SIM-Karte mit einem Isolierkörper, der mehrere Kontaktkammern mit darin eingesetzten Lesekontakten aufweist, die über die Obberseite des Isolierkörpers mit ihren Kontaktkuppen hinausragen. Der Kontaktsatz kann auf der Leiterplatte eines Geräts angeschraubt sein. Der Kontaktsatz dient nicht zur Führung der SIM-Karte. Ein Deckel dient zum Andrücken der SIM-Karte an die Oberseite des Kontaktsatzes.

DE-A-40 29 576 A1 zeigt eine Kontaktiereinrichtung für Chipkarten unterschiedlicher Größe unter Verwendung eines Chipkartenlesers, der durch einen Kartenaufnehmer derart adaptiert wird, daß eine SIM-Karte mit dem Chipkartenleser lesbar ist.

DE-A-40 30 196 zeigt eine Kontaktiereinrichtung. Diese Kontaktiereinrichtung weist ein nahmenartige Trägerelement, in dem Kontaktelemente eingespritzt sind. Diese eingespritzten Kontaktelemente haben anschlußseitig SMT-Anschlüsse zur Verbindung beispielsweise mit einer Leiterplatte.

Die bekannten Kontaktiereinrichtungen, insbesondere auch die für SIM-Karten, weisen insbesondere wegen ihrer Kartenführungsmittel größere Ausmaße auf, als die SIM-Karte selbst, die üblicherweise eine Größe von 25 mm x 15 mm besitzt. Diese Führungsmittel beanspruchen somit Platz, der für andere Zwecke erforderlich sein kann. Insbesondere dann, wenn die Kontaktiereinrichtung auf einer Leiterplatte angeordnet ist, kann Raum verloren gehen, der ansonsten von anderen Bauteilen benutzt werden könnte. Dies ist insbesondere auf dem Gebiet der SMT (Surface Mounted Technology) ein Problem. Ein weiteres Problem ist noch die Erwärmung der Kontaktiereinrichtung, insbesondere auch deshalb, weil sich die Kontaktelemente im Kontaktträger abstützen müssen.

Ein weiterer Nachteil der Kontaktiereinrichtung des Standes der Technik besteht darin, daß für hohe Steckzyklenzahl im allgemeinen eine Absenkmechanik benötigt wird. Arbeitet man ohne Absenkmechanik, so zeigt sich das bei Schleifkontakten mit galvanisch aufgebrachten Edelmetallschichten darin, daß diese nach wenigen tausend Zyklen bis auf das Grundmaterial durchgerieben sind.

Der Erfindung liegt die Aufgabe zugrunde, die Nachteile des Standes der Technik zu vermeiden. Insbesondere beabsichtigt die Erfindung, eine Kontaktiereinrichtung vorzusehen, die außerordentlich geringe Außenmaße besitzt und zusammen mit anderen SMD-Bauteilen verwendet werden kann. Ferner soll trotz kleiner und dünner Bauweise auch unter Wärmebedingungen eine stabile Konstruktion gewährleistet sein.

Diese Aufgabe wird durch die Merkmale der in Patentanspruch 1 beschriebenen Erfindung gelöst.

Weitere Vorteile und Einzelheiten der Erfindung ergeben sich aus der Beschreibung von Ausführungsbeispielen an Hand der Zeichnung; in der Zeichnung zeigt:
- Fig. 1: eine schematische Schnittansicht einens erfindungsgemäßen Kontaktträgers angeordnet auf einer Basisplatte in der Form einer gedruckten Schaltungsplatte oder Platine;
- Fig. 2: einen Schnitt längs Linie A-B in Fig. 3;
- Fig. 3: eine Draufsicht auf den Kontaktträger gemäß Fig. 2;
- Fig. 4: eine schematische Seitenansicht der bevorzugten Ausgestaltung eines Kontaktelements insbesondere zur Verwendung in einem erfindungsgemäßen Kontaktelement;
- Fig. 5: eine Seitenansicht eines weiteren Ausführungsbeispiels einer Kontaktiereinrichtung;
- Fig. 6: einen Schnitt durch ein Gerät, beispielsweise einen Teil eines Telefongeräts in dem die erfindungsgemäße Kontaktiereinrichtung gemäß Fig. 5 eingebaut ist;
- Fig. 7: einen Schnitt längs Linie A-A in Fig. 8;
- Fig. 8: eine vergrößerte Draufsicht auf die Kontaktiereinrichtung gemäß Fig. 5.

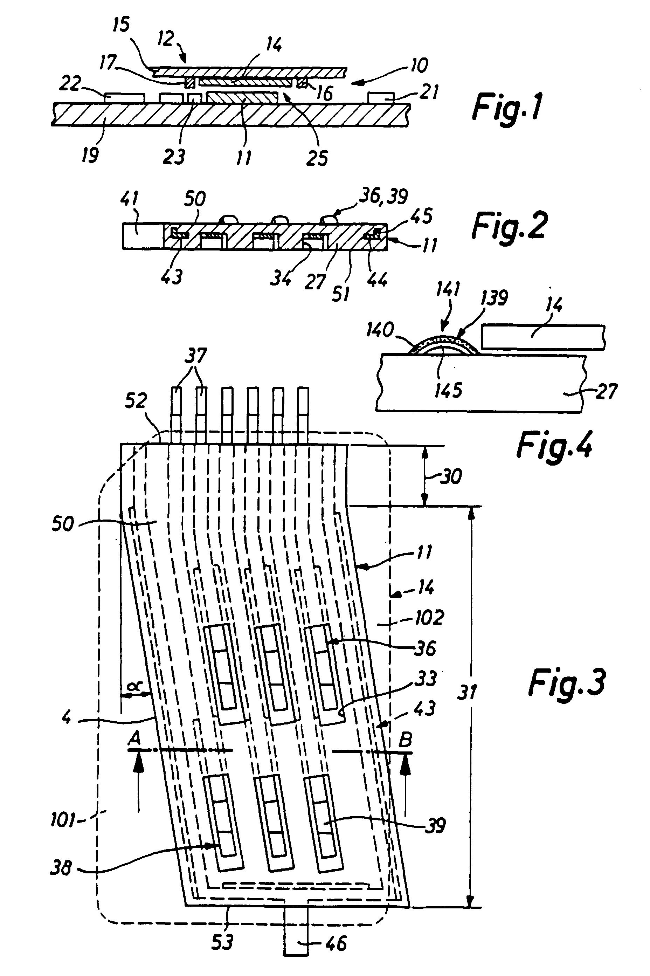

Fig. 1 zeigt eine erfindungsgemäße Kontaktiereinrichtung 10, die einen Kontaktträger 11 sowie Kartenführungsmittel 12 für eine Chipkarte, vorzugsweise eine SIM-Karte 14, aufweist.

Der Kontaktträger 11 ist vorzugsweise dazu geeignet, auf einer Basisplatte 19 angeordnet zu werden, die vorzugsweise eine gedruckte Schaltungsplatte (Leiterplatte) oder Platine ist, und die insbesondere für die SMD-Technik geeignet ist.

In Fig. 1 erkennt man, daß die Führungsmittel 12 für die SIM-Karte 14 nicht durch den Kontaktträger 11 gebildet werden, sondern getrennt, vorzugsweise mit Abstand, gegenüber diesem angeordnet sind. Im gezeigten Ausführungsbeispiel werden die Kartenführungsmittel 12 durch zwei Führungsschienen 16, 17 gebildet, die an der Unterseite einer Platte oder eines Gehäuses 15 angeordnet sind. Durch diese Führungsmittel 12 wird die SIM-Karte 14 in entsprechendem Abstand und Lage gegenüber dem Kontakträger 11 angeordnet, so daß eine gute Kontaktgabe stattfinden kann.

Wie man im einzelnen in Fig. 1 erkennt, sind neben dem Kontakträger 11 auf der Oberseite der Platine oder SMD-Platte 19 weitere SMD-Komponenten 21, 22, und 23 angebracht. Dadurch daß die Führungsmittel 12 nach oben gegenüber dem Kontaktträger 11 mit Abstand angeordnet sind, ergibt sich zu beiden Seiten des Kontaktträgers 11 zusätzlicher Platz 25, der im gezeigten Ausführungsbeispiel beispielsweise durch die SMT-Komponente 23 genutzt werden kann.

Wie man in Fig. 2 und 3 erkennt, wird der Kontaktträger 11 vorzugsweise durch einen einstückigen Körper 27, vorzugsweise aus Kunststoff, gebildet. Der Körper 27 hat zwei Abschnitte, und zwar einen ersten Abschnitt 30 in der Form eines Rechtecks sowie einen damit einstückigen zweiten Abschnitt 31 in der Form eines Parallelogramms. Durch diese Bauweise ergibt sich eine beträchtliche Platzeinsparung, da Abmessungen möglich sind, die - wie gezeigt - kleiner sind als die der gestrichelten SIM-Karte 14 in Fig. 3. Der Kontaktträgerkörper 27 ist kaum breiter als die Breitenanordnung von Kontaktelementen 36.

In dem Kontaktträger 11 sind in der gezeigten versetzten Art und Weise sechs parallele Schlitze 33 in der Oberseite 50 ausgebildet, die in Ausnehmungen 34 an der Unterseite 51 übergehen. Die Länge der Ausnehmungen 34 ist so gewählt, daß die in den Schlitzen 33 endenden Kontaktelemente 36 in der Form von Kontaktfedern eine hinreichende Kontaktkraft vorsehen können. Vorzugsweise sind die Kontaktelemente 36 vorgespannt.

Die Kontaktelemente 36 weisen Anschlußenden 37 auf, die aus der einen Schmalseite 52 des Kontaktträgers 11 austreten. Die Kontaktelemente 36 werden bei der Herstellung des Kontaktträgers 11 vorzugsweise in das Kunststoffmaterial eingespritzt. Entgegengesetzt zu den Anschlußenden 37 besitzen die Kontaktelemente 36 Kontaktenden 38, die Kontaktkuppen 39 bilden, welche sich über die Oberseite 50 des Kontaktträgers 11 im eine Chipkarte 14 nicht kontaktierenden Zustand hinaus erstrecken (vgl. Fig. 2)

Der erwähnte Parallelogrammabschnitt 31 ist gegenüber dem rechteckigen Abschnitt 30 um einen Winkel _ in der Größenordnung von 30° verschwenkt. Somit wird auf der einen Seite des Kontaktträgers 11 (wie in Fig. 2 gezeigt) eine Schrägfläche 41 gebildet. Es ergeben sich also gegenüber dem Umriß der SIM-Karte 14 in Fig. 3 mit 101 und 102 bezeichnete im gesammten dreieckige Freiräume, die für z. B. SMD-Bauteile verfügbar sind. Die Führungsteile für die SIM-Karte sind also vorzugsweise weggeschnitten.

Im Kontakträger 11 ist ferner ein vorzugsweise aus Metall bestehender Rahmen 43 angeordnet, der vorzugsweise etwa parallel zu den Längsseiten und zu der einen der Schmalseite 52 gegenüberliegenden Schmalseite 53 des Kontaktträgers 11 verläuft. Der im ganzen U-förmige Metallrahmen 43 hat im Querschnitt vorzugsweise "L"-Form, bildet also einen waagerechten Teil 44 und einen Schenkel 45 (Fig. 2). Der Rahmen 43 bildet ferner vorzugsweise einen Lötstützpunkt 46, der mittig an der Schmalseite 53 austritt. Die Schenkel 45 verlaufen etwa parallel zu den Außenkanten des Kontaktträgers 11. Die Verwendung des Rahmens 43 erhöht die mechanische und thermische Stabilität, bei kleinster Bauweise auch hinsichtlich der Dicke des Kontaktträgers.

Fig. 4 zeigt einen weiteren Aspekt der Erfindung, und zwar ist hier gezeigt, daß die Kontaktfeder, repräsentiert durch eine Kontaktfeder 141 vorzugsweise mindestens im Bereich der Kontaktkuppe 139 mit einer walzplattieren Edelmetallschicht 140 versehen sind. Diese Edelmetallschicht 140 kann auch in irgendeiner anderen mechanisch/ physikalischen Art und Weise auf das Grundmaterial 145 des Kontaktträgers 141 aufgebracht sein. Diese Schicht 140 ermöglicht eine hohe Steckzyklenzahl, was von Vorteil ist, da die erfindungsgemäße Kontaktiereinrichtung 10 ohne Absenkmechanik arbeitet.

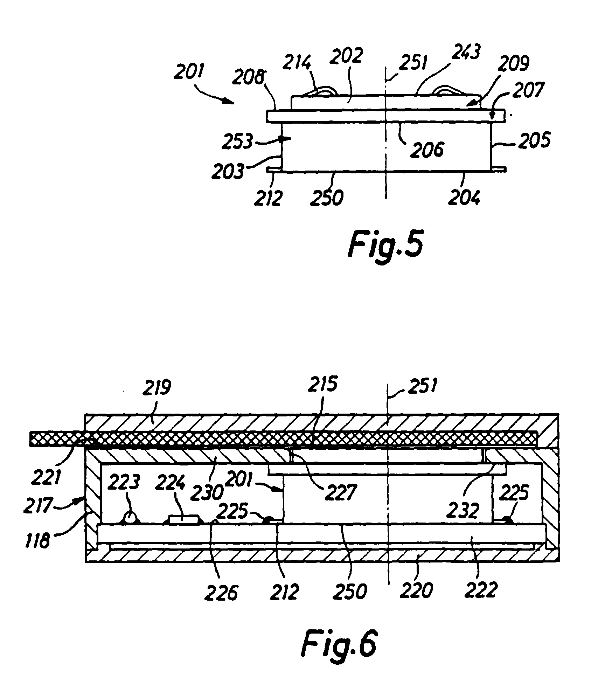

Die Fig. 5 bis 8 zeigen ein weiteres Ausführungsbeispiel einer Kontaktiereinrichtung 201 gemäß einem dritten Aspekt der Erfindung. Die Kontaktiereinrichtung 201 ist zwar vorzugsweise einstückig aus Kunststoffmaterial hergestellt, vorzugsweise gespritzt, besitzt aber, vgl. Fig. 5 (von oben nach unten gesehen) drei Abschnitte oder Teile: einen zurückversetzten Teil oder Einsatzteil 209, einen Rand oder Kragenteil 207 und einen Kastenteil (Kastenmittel) 253. Der Kastenteil 253 wird vorzugsweise durch vier Seitenwände 203, 204, 205, 206 gebildet. Der Kastenteil 253 verleiht der Kontaktiereinrichtung einen starren, stabilen Aufbau und ermöglicht dadurch, daß der Kastenteil 253 an seinem freien Ende eine durchgehende umlaufende plane Auflage- oder Abdichtfläche 250 bildet, eine sichere Anbringung an einer Leiterplatte 222 (Fig. 6).

Der Kragenteil 207 dient ebenfalls zur Verstärkung der Kontaktiereinrichtung 201 und erhöht deren Stabilität.

Der jedenfalls gegenüber dem Einsatzteil 209 radial (d. h. senkrecht zur Längsachse 251) nach Außen vorstehende Kragenteil 207 bildet eine Auflagefläche 208 die, wie in Fig. 6 gezeigt, an einem Gehäuse 217, beispielsweise dem Gehäuse eines Telefongeräts, abdichtend befestigbar ist, beispielsweise dort angeklebt ist. In gleicher Weise kann auch die bereits erwähnte Abdichtfläche 250 auf der gedrukkten Schaltungsplatte 222 aufgeklebt sein, wobei eine auf der Oberfläche 213 der Kontaktiereinrichtung 201 vorgesehene Saugfläche 243 das Ansaugen der Kontaktiereinrichtung 201 bei der Montage erleichtert.

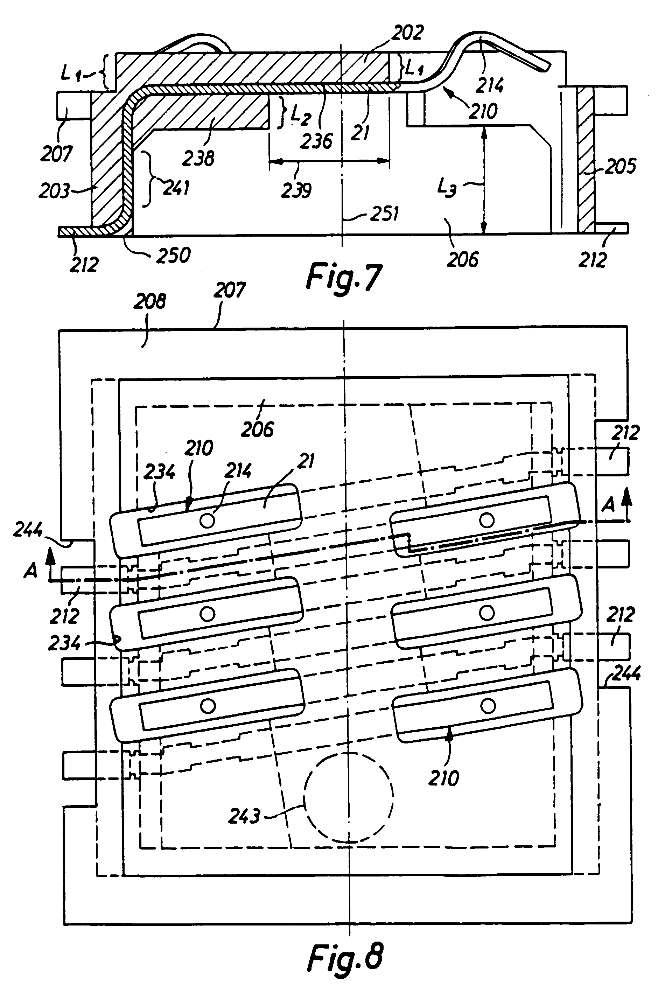

Im dargestellten Ausführungsbeispiel ragt der Kragenteil 207 außenumfangsmäßig über die Umfangserstreckung des Kastenteils 253 hinaus, was nicht notwendig, aber aus Gründen der Platzeinsparung zweckmäßig ist. Die Länge L3 des Kastenteils 253 in Richtung der Längsachse 251 (vgl. Fig. 7) ist vorzugsweise mindestens gleich der Gesamtdicke L1 + L2 der oberen Wand 202 vorzugsweise aber größer.

Nach dieser Übersichtsbeschreibung sei nunmehr im Einzelnen auf die Fig. 6 eingegangen, in der man das Gehäuse 217 im Schnitt sieht, welches aus einem Rahmen 218, einem Deckel 219, einem Boden 220, sowie einer Zwischenwand 230 besteht, wobei zwischen Deckel 219 und Zwischenwand 230 ein Aufnahmeschlitz 221 für eine Berechtigungskarte 215 vorzugsweise eine Chipkarte oder eine SIM-Karte gebildet wird. Im unteren Bereich des Gehäuses 217 ist die Leiterplatte 222 befestigt, auf deren Oberseite vorzugsweise SMT-Bauteile 223 und 224 und auch Anschlußenden 212 von Kontaktelementen 210 der Kontaktiereinrichtung 201 angelötet sind, wie dies durch das Lot 225 angedeutet ist. Die Kontaktiereinrichtung 201 ist vorzugsweise auf der Leiterplattenoberseite 226 mittels ihrer Auflage- oder Abdichtfläche 250 beispielsweise unter Verwendung von Kleber angeklebt. Auf diese Weise ergibt sich eine einwandfreie Abdichtung zwischen der umlaufenden planen Abdichtfläche 250 und der Oberseite 226 der Leiterplatte 222.

Die Abdichtung gegenüber der Elektronik, z. B. den Bauteilen 223, 224 und anderen Bauteilen wird ferner erreicht durch das abdichtende Verkleben der Auflage- oder Dichtfläche 208 z. B. mit der Unterseite 232 der Zwischenwand 230 vorzugsweise im Bereich der Auflagefläche 208. Vorzugsweise sitzt, wie in Fig. 6 gezeigt, der Einsatzteil 209 in einer Ausnehmung 227 der Zwischenwand 230. Selbst wenn also die Chipkarte 215 sich nicht im Aufnahmeschlitz 221 befindet wird so eine einwandfreie Abdichtung der Elektronik gegenüber der Außenwelt vorgesehen. Nachdem der Kragenteil 207 die Kontaktiereinrichtung 201 vollständig - vgl. Fig. 8 - umgibt wird bereits durch das Verkleben der Flächen 232 und 208 eine vollständige Abdichtung erreicht. Zusätzlich könnte natürlich auch noch der in Fig. 6 gezeigte Raum zwischen Einsatzteil 209 und Ausnehmung 227 verklebt oder vergossen sein.

Im dargestellten Ausführungsbeispiel sind an der dargestellten Kontaktiereinrichtung 201 keine Führungsmittel für die Chipkarte 215 vorgesehen. Die Oberfläche 213 befindet sich auf einer Ebene mit der den Aufnahmeschlitz 221 unten begrenzenden Oberfläche der Zwischenwand 230.

Die Kontaktiereinrichtung 201 besitzt die bereits kurz erwähnten Kontaktelemente 210 (Fig. 7 und 8) von denen in den Fig. 5 und 6 nur die Kontaktkuppen 214 sowie die Anschlußenden 212 dargestellt sind. In den Fig. 7 und 8 sind die Kontaktelemente 210 im Einzelnen dargestellt, man erkennt neben den Anschlußenden 212 noch die Kontaktenden 211 die die bereits erwähnten Kuppen 214 bilden. Die Kontaktelemente 10 sind vorzugsweise in die Kontaktiereinrichtung 201 eingespritzt und zwar läuft, wie in Fig. 7 gezeigt, ein waagrechter Teil in der oberen Wand 202 und ein senkrechter Teil verläuft in den Seitenwänden des Kastens 253 und zwar in den beiden gegenüberliegenden Seitenwänden 203 und 205. Dadurch wird die Stabilität der Kontaktiereinrichtung 201 weiter verbessert.

Der waagrechte Teil der Kontaktelemente 210 ist nicht vollständig eingespritzt, sondern es wird ein Freiraum 239 gebildet und zwar dadurch daß die ansonsten vorhandene Wandstärke L1 + L2 der oberen Wand 202 zurückgenommen wird, beispielsweise auf die Größe L1. So erreicht man, daß die Kontaktfeder 210 vorgespannt an der freiliegenden Unterseite 236 der oberen Wand 202 in Ruhestellung anliegt. Bei Betätigung durch die Chipkarte 215 wird dann das Kontaktelement 210 von der Fläche 236 federnd weggedrückt. Die in den Seitenwänden 203, 205 des Kastenteils 251 eingespritzten Kontaktelemente 210 können in einem Bereich 241 (Fig. 7) freiliegen, sind aber zur Abdichtfläche 250 hin wieder umspritzt um dann vorzugsweise senkrecht zur Längsachse 251 verlaufend nach Außen herausgeführt zu sein. Im Bereich der Anschlußenden 212 hat der Kragenteil infolge von Ausschnitten 244 (Fig. 8) eine verminderte Breite, die aber für eine ausreichende Dichtwirkung genügend ist.

Wie man in der Fig. 8 erkennt sind die in der oberen Wand 202 für die Kontaktelemente 210 ausgebildeten Schlitze 234 leicht schräg verlaufend ausgebildet, und zwar ebenso wie die zugehörigen Kontaktelemente.

## Patentansprüche

1. Kontaktiereinrichtung (10) für eine Chip-Karte (14), insbesondere eine SIM-Karte, mit einem Anschlußenden (37) für die SMD-Technik aufweisende Kontaktelemente (36) tragenden Kontaktträger (11), der nur die Funktion des Kontaktierens, nicht aber des Führens der Chip-Karte (14) vorsieht, und der Kontaktträger (11) kleinere Abmessungen als die der Chip-Karte (14) aufweist, wobei der Kontaktträger (11) als SMT-Bauteil ausgelegt ist, in das die Kontaktelemente eingespritzt sind, wobei die eingespritzten Kontaktelemente die Stabilität der Kontaktiereinrichtung verbessern, wobei der Kontaktträger einen Abschnitt (31) aufweist, der im wesentlichen die Form eines nichtrechteckigen Parallelogramms besitzt.

2. Kontaktiereinrichtung nach Anspruch 1, dadurch gekennzeichnet, daß Führungsmittel (12) für die Chip-Karte (14) mit Abstand vom Kontaktträger (11) angeordnet sind.

3. Kontaktiereinrichtung nach Anspruch 2, dadurch gekennzeichnet, daß die Führungsmittel (12) unabhängig vom Kontakträger (11) an einem Gehäuse (15) oberhalb des Kontaktträgers (11) angeordnet sind.

4. Kontaktiereinrichtung nach einem der vorhergehenden Ansprüche, dadurch gekennzeichnet, daß der Kontaktträger (11) mit einer integrierten Metalleinlage (43) verstärkt ist.

5. Kontaktiereinrichtung nach einem der vorhergehenden Ansprüche, dadurch gekennzeichnet, daß der Kontaktträger (11) aus Kunststoff besteht und einen Metallrahmen (43) aufweist, der benachbart zu den Seitenkanten des Kontaktträgers (11) eingebettet in diesem verläuft.

6. Kontaktiereinrichtung nach Anspruch 5, dadurch gekennzeichnet, daß der Metallrahmen (43) an einer Schmalseite (53) des Kontaktträgers einen Lötstützpunkt (46) bildet.

7. Kontaktiereinrichtung nach einem der vorhergehenden Ansprüche, dadurch gekennzeichnet, daß sämtliche Anschlußenden (37) der Kontaktelemente (36) an einer Schmalseite (52) des Kontaktträgers (11) austreten.

8. Kontaktiereinrichtung nach Anspruch 6 und 7, dadurch gekennzeichnet, daß die Schmalseite (52) des Kontaktträgers, an der die Anschlußenden (37) austreten, versetzt ist gegenüber der Schmalseite (53), an der der Lötstützpunkt (46) austritt.

9. Kontaktiereinrichtung nach einem der vorhergehenden Ansprüche, dadurch gekennzeichnet, daß jedes Kontaktelement mindestens im Bereich von Kontaktkuppen (139) mit einer Edelmetallschicht (140) ausgestattet ist, die mechanisch/physikalisch aufgebracht ist.

10. Kontaktiereinrichtung nach einem der vorhergehenden Ansprüche, dadurch gekennzeichnet, daß der Kontaktträger Schlitze (33) und Ausnehmungen (34) zur Aufnahme der Kontaktelemente (36) bildet.

11. Kontaktiereinrichtung nach einem der Ansprüche 5-10, dadurch gekennzeichnet, daß der Metallrahmen (43) im ganzen U-förmig ist.

12. Kontaktiereinrichtung nach einem der vorhergehenden Ansprüche, dadurch gekennzeichnet, daß die Breite des Kontaktträgers (11) schmaler ist als die Breite der Chip-Karte (14), und zwar keilförmig verjüngt (dreieckförmige Freiräume 101, 102) auf entgegengesetzten Seiten.

13. Kontaktiereinrichtung nach einem der vorhergehenden Ansprüche, dadurch gekennzeichnet, daß zur dichten Anordnung in einem Gehäuse (217) ein um die Kontaktiereinrichtung (201) herum verlaufender Kragen (207) vorgesehen ist, der zur Abdichtung zwischen einem Gehäuse (217) und der Kontaktiereinrichtung (201) dient, und daß ferner an dem Axialende der Kontaktiereinrichtung (201), welches entgegengesetzt zu dem Ende liegt, wo Kontaktelemente (210, 214) zur Kontaktgabe mit der Chip-Karte austreten, eine durchgehende plane Auflagefläche (250) ausgebildet ist, die zur Abdichtung zwischen der Kontaktiereinrichtung (201) und einer gedruckten Schaltungsplatte (222) dient, auf der die Kontaktiereinrichtung (201) angeordnet ist.

14. Kontaktiereinrichtung nach einem der vorhergehenden Ansprüche, dadurch gekennzeichnet, daß die Kontaktiereinrichtung einen aus Kunststoff gebildeten Körper umfaßt, der einen Einsatzteil (209), einen bzw. den Kragen (207) und einen Kastenteil (253) aufweist,
wobei die Kontaktelemente (210) ferner über die Oberfläche (213) des Einsatzteils (209) hinausragende Kontaktenden (211) besitzen, während die Anschlußenden (212) am freien Ende des Kastenteils herausgeführt sind, wobei dieses freie Ende eine Fläche (250) bildet, die geeignet ist, abdichtend an einer Schaltungsplatte (222) befestigt zu werden, und wobei am Kragenteil (207) entgegengesetzt zur Fläche (250) weisend eine Auflagefläche (208) zur abdichtenden Befestigung an einem Gehäuse (217) vorgesehen ist.

15. Kontaktiereinrichtung nach Anspruch 14, dadurch gekennzeichnet, daß der Kragen (207) sowohl über den Umfang des Einsatzteils (209) als auch über den Umfang des Kastenteils (253) quer zu einer Längsachse (251) hinausragt.

16. Kontaktiereinrichtung nach einem der Ansprüche 13-15, dadurch gekennzeichnet, daß der Kragen (207) Ausschnitte (244) im Bereich der Anschlußenden (212) der Kontaktelemente (210) aufweist, wobei aber noch immer eine hinreichende Kragenbreite verbleibt, um eine sichere Abdichtung zu gewährleisten.

17. Kontaktiereinrichtung nach einem der Ansprüche 14-16, dadurch gekennzeichnet, daß der Kastenteil (253) durch mehrere Wände (203, 204, 205, 206) gebildet ist, die parallel zur Längsachse (251) der Kontaktiereinrichtung (201) verlaufen.

18. Kontaktiereinrichtung nach einem der Ansprüche 14-17, dadurch gekennzeichnet, daß die Fläche (250) mit der Oberseite (226) einer gedruckten Schaltungsplatte (222) verklebt ist und daß eine Auflagefläche (208) des Kragens (207) mit dem Gehäuse (217) verklebt ist.

19. Kontaktiereinrichtung nach einem der Ansprüche 14-18, dadurch gekennzeichnet, daß die Kontaktiereinrichtung (201) durch Lot (225) elektrisch und mechanisch mit einer bzw. der gedruckten Schaltungsplatte (222) verbunden ist.

20. Kontaktiereinrichtung nach einem der Ansprüche 14-19, dadurch gekennzeichnet, daß das Einsatzteil (209) in eine Öffnung (227) des Gehäuses (217) eingesetzt ist, daß die Höhe (L1) des Einsatzteils (209) derart gewählt ist, daß die Kontaktiereinrichtung (201) mit der Auflagefläche (208) an der Unterseite eines einen Aufnahmeschlitz (221) begrenzenden Gehäuseteils (230) befestigt ist, und daß die Oberfläche (213) des Einsatzteils (209) mit der Oberfläche des Gehäuseteils (230) fluchtet.

21. Kontaktiereinrichtung nach einem der Ansprüche 17-20, dadurch gekennzeichnet, daß die Höhe (L3) der Seitenwände (203, 204, 205, 206) des Kastenteils (253) in Richtung der Längsachse (251) gleich oder größer der Dicke (L1 + L2) einer oberen Wand oder Deckenwand (202) des Kastenteils (253) ist.

## Claims

1. A contacting apparatus (10) for a chipcard (14) in particular for a SIM-card, said contacting apparatus having a contact support (11) supporting contact elements (36) which comprise terminal ends (37) being adapted for SMT (surface mounted technology), said contact support (11) providing only the function of contacting but not the function of guiding the chipcard (14), and wherein said contact support (11) has smaller dimensions than the chipcard (14),
said contact support (11) being designed as a SMT-component in which said contact elements are injection molded, said injection molded contact elements improving the stability of the contacting apparatus, wherein said contact support comprises one section (31) having substantially the shape of a non rectangular parallelogramm.

2. The contacting apparatus of claim 1, characterized in that guide means (12) for the SIM-card are arranged spaced from said contact support (11).

3. The contacting apparatus of claim 2, characterized in that said guide means (12) are mounted independently of the contact support (11) at a housing (15) above said contact support (11).

4. Contacting apparatus as set forth in any of the preceding claims, characterized in that said contact support (11) is provided with an integrated metal insert (43).

5. Contacting apparatus as set forth in any of the preceding claims, characterized in that said contact support (11) is made of plastic material and comprises a metal frame (43) which extends adjacent to the side edges of said contact support (11) and is embedded therein.

6. Contacting apparatus as set forth in claim 5, characterized in that said metal frame (43) forms a soldering base point (46) at one of the narrow sides (53) of said contact support.

7. Contacting apparatus as set forth in any of the preceding claims, characterized in that all of the termination ends (37) of the contact elements (36) exit at one (52)of the narrow sides of the contact support (11).

8. Contacting apparatus as set forth in claim 6 or 7, characterized in that the narrow side (52) of the contact support where the termination ends (37) exit is offset with respect to the narrow side (53) at which the soldering base point (46) exits.

9. Contacting apparatus as set forth in any of the preceding claims, characterized in that each contact element is provided at least in the area of contact cusps (139) with a layer (140) of noble metal, said layer being applied mechanically/physically.

10. Contacting apparatus as set forth in any of the preceding claims, characterized in that the contact support comprises slots (33) and recesses (34) adapted to receive the contact elements (36).

11. Contacting apparatus as set forth in any of the preceding claims, characterized in that said metal frame (43) is generally U-shaped.

12. Contacting apparatus as set forth in any of the preceding claims, characterized in that the width of the contact support (11) is narrower than the width of the chip-card (14), said contact support tapering like a wedge on opposite sides (forming triangular free spaces 101, 102).

13. Contacting apparatus as set forth in any of the preceding claims, characterized in that, for a dense arrangement within a housing (217), a collar (207) extending about the contacting apparatus (201) is provided which provides sealing between the housing (217) and the contacting apparatus (201), and that further at the axial end of the contacting apparatus (201) which is opposite to the end of the contacting apparatus where the contact elements (210, 214) exit for contacting the chip-card, a continuous planar support surface (250) is provided for forming a seal between the contacting apparatus (201) and a printed circuit board (222) on which said contacting apparatus (201) is arranged.

14. Contacting apparatus as set forth in any of the preceding claims, characterized in that said contacting apparatus comprises a body made of plastic material, said body comprising an insert portion (209), a collar (207) and a box portion (253), wherein said contact elements (210) comprise the contact ends (11) which extend beyond the upper surface (213) of the insert portion (209), while said termination ends (212) are guided out of the free end of the box portion, said free end forming a surface (250) which is adapted to be sealingly mounted to a printed circuit board (222), and wherein a support surface (208) is located at the collar portion (207) opposite to the surface (250) for being sealingly mounted to a housing (217).

15. Contacting apparatus as set forth in claim 14, characterized in that the collar (207) extends beyond the circumference of the insert portion (209) as well as beyond the circumference of the box portion (253) in a direction transverse to a longitudinal axis (251).

16. Contacting apparatus as set forth in any of claims 13-15, characterized in that the collar (207) comprises cut-outs (244) in the area of the termination ends (212) of the contact elements (210), whereby a sufficient collar width remains so as to guarantee a safe sealing effect.

17. Contacting apparatus as set forth in any of claims 14-16, characterized in that the box portion (253) is formed by a plurality of walls (203, 204, 205, 206) which extend parallel to the longitudinal axis (251) of the contacting apparatus (201).

18. Contacting apparatus as set forth in any of claims 14-17, characterized in the surface (250) is bonded to the upper surface (226) of a printed circuit board (222) and that one support surface (208) of the collar portion (207) is bonded to the housing (217).

19. Contacting apparatus as set forth in any of claims 14-18, characterized in that the contacting apparatus (201) is electrically and mechanically connected to the printed circuit board (222) by means of solder (225).

20. Contacting apparatus as set forth in of claims 14-19, characterized in that the insert portion (209) is inserted into an opening (227) of the housing (217) and that the height (L1) of the insert portion (209) is selected such that the contacting apparatus (201) is mounted with the support surface (208) to the bottom surface of a housing portion (230) which bounds said receiving slot (221) and that the upper surface (213) of the insert portion (209) is aligned with the surface of said housing member (230).

21. Contacting apparatus as set forth in any of claims 17-20, characterized in that the height (L3) of the sidewalls (203, 204, 205, 206) of the box portion (253) in direction of the longitudinal axis (251) is equal or greater than the thickness (L1 + L2) of the upper wall or top wall (202) of the box portion (253).

## Revendications

1. Dispositif d'établissement de contact (10) pour une carte à puce (14), notamment une carte SIM, comportant un porte-contacts (11), qui porte des éléments de contact (36) comportant des extrémités de raccordement (37) pour la technique SMD, et qui assume uniquement la fonction d'établissement du contact, mais pas celle du guidage de la carte à puce (14), et dans lequel le porte-contacts (11) possède des dimensions inférieures à celles de la carte à puce (14),
et dans lequel le porte-contacts (11) est agencé sous la forme d'un composant SMT, dans lequel les éléments de contact sont moulés par injection, les éléments de contact moulés par injection améliorant la stabilité du dispositif d'établissement de contact, et dans lequel le porte-contacts comporte une partie (32) qui possède essentiellement la forme d'un parallélogramme non rectangulaire.

2. Dispositif d'établissement de contact selon la revendication 1, caractérisé en ce que des moyens de guidage (12) pour la carte à puce (14) sont disposés à distance du porte-contacts (11).

3. Dispositif d'établissement de contact selon la revendication 2, caractérisé en ce que les moyens de guidage (12) sont disposés, indépendamment du porte-contacts (11) sur un boîtier (15) au-dessus du porte-contacts (11).

4. Dispositif d'établissement de contact selon l'une des revendications précédentes, caractérisé en ce que le porte-contacts (11) est renforcé par un insert métallique intégré (43).

5. Dispositif d'établissement de contact selon l'une des revendications précédentes, caractérisé en ce que le porte-contacts (11) est réalisé en matière plastique et possède un cadre métallique (43), qui s'étend au voisinage des bords latéraux du porte-contacts (11), en étant inséré dans ce dernier.

6. Dispositif d'établissement de contact selon la revendication 5, caractérisé en ce que le cadre métallique (43) forme, sur un petit côté (53) du porte-contacts, un point d'appui de brasage (46).

7. Dispositif d'établissement de contact selon l'une des revendications précédentes, caractérisé en ce que toutes les extrémités de raccordement (37) des éléments de contact (36) ressortent sur un petit côté (52) du porte-contacts (11).

8. Dispositif d'établissement de contact selon les revendications 6 et 7, caractérisé en ce que le petit côté (52) du support de contact, sur lequel ressortent les extrémités de raccordement (37), est décalé par rapport au petit côté (53), sur lequel ressort le point d'appui de brasage (46).

9. Dispositif d'établissement de contact selon l'une des revendications précédentes, caractérisé en ce que chaque élément de contact est équipé, au moins dans la zone de pointes de contact (139), d'une couche en métal précieux (140), qui est déposée mécaniquement/physiquement.

10. Dispositif d'établissement de contact selon l'une des revendications précédentes, caractérisé en ce que le porte-contacts forme des fentes (33) et des évidements (34) pour loger les éléments de contact (36).

11. Dispositif d'établissement de contact selon l'une des revendications 5-10, caractérisé en ce que le cadre métallique (43) est en forme de U dans sa totalité.

12. Dispositif d'établissement de contact selon l'une des revendications précédentes, caractérisé en ce que la largeur du porte-contacts (11) est inférieure à la largeur de la carte à puce (14), c'est-à-dire qu'elle se rétrécit avec une forme en coin (espaces libres de forme triangulaire 101, 102) sur des côtés opposés.

13. Dispositif d'établissement de contact selon la revendication précédentes, caractérisé en ce que pour la disposition étanche dans un boîtier (217), il est prévu une partie formant col (207), qui s'étend autour du dispositif d'établissement de contact (201) et qui sert à établir l'étanchéité entre un boîtier (217) et le dispositif d'établissement de contact (201) et qu'en outre sur l'extrémité axiale du dispositif d'établissement de contact (201), qui est située à l'opposé de l'extrémité, au niveau de laquelle des éléments de contact (210, 214) ressortent pour établir le contact avec la carte à puce, est formée une surface d'appui plane continue (250), qui sert à établir l'étanchéité entre le dispositif d'établissement de contact (201) et une plaquette circuits imprimés (222), sur laquelle est disposé le dispositif d'établissement de contact (201).

14. Dispositif d'établissement de contact selon l'une des revendications précédentes, caractérisé en ce que le dispositif d'établissement de contact comprend un corps formé d'une matière plastique et qui possède un élément d'insertion (209), une ou la partie formant col (207) et une partie formant boîte (253),
les éléments de contact (210) possédant en outre des extrémités de contact (211), qui font saillie au-dessus de la surface (213) de l'élément d'insertion (209), tandis que les extrémités de raccordement (208) ressortent sur l'extrémité libre de la partie formant boîte, cette extrémité libre formant une surface (250) qui convient pour être fixée d'une manière étanche contre une plaquette à circuits imprimés (222), tandis qu'une surface d'appui (208) servant à réaliser la fixation étanche sur un boîtier (217) est prévue sur la partie formant col (207) en étant dirigée à l'opposé de la surface (250).

15. Dispositif de contact selon la revendication 14, caractérisé en ce que la partie formant col (207) fait saillie aussi bien au-delà de la périphérie de l'élément d'insertion (209) qu'au-delà de la périphérie de la partie en forme de boîte (253), transversalement par rapport à un axe longitudinal (251).

16. Dispositif d'établissement de contact selon l'une des revendications 13-15, caractérisé en ce que la partie formant col (207) comporte des découpes (244) dans la zone des extrémités de raccordement (212) des éléments de contact (210), mais en comportant toujours une largeur suffisante pour garantir une étanchéité sûre.

17. Dispositif d'établissement de contact selon l'une des revendications 14-16, caractérisé en ce que la partie formant de boîte (253) est formée par plusieurs parois (203, 204, 205, 206), qui sont parallèles à l'axe longitudinal (251) du dispositif d'établissement de contact (201).

18. Dispositif d'établissement de contact selon l'une des revendications 14-17, caractérisé en ce que la surface (250) est collée sur la face supérieure (226) d'une plaquette à circuits imprimés (222) et qu'une surface d'application (208) de l'élément formant col (207) est collé sur le boîtier (217).

19. Dispositif d'établissement de contact selon l'une des revendications 14-18, caractérisé en ce que le dispositif d'établissement de contact (201) est relié électriquement et mécaniquement, par une brasure (225), à une ou à la plaquette à circuits imprimés (222).

20. Dispositif d'établissement de contact selon l'une des revendications 14-19, caractérisé en ce que l'élément d'insertion (209) et inséré dans une ouverture (227) du boîtier (210), que la hauteur (L1) de la partie d'insertion (209) est choisie de telle sorte que le dispositif d'établissement de contact (201) est fixé par la surface d'appui (20B) contre la face inférieure d'une partie (230) du boîtier, qui délimite une fente de réception (221), et que la surface (213) de l'élément d'insertion (209) est alignée avec la surface de la partie (230) du boîtier.

21. Dispositif d'établissement de contact selon l'une des revendications 17-20, caractérisé en ce que la hauteur (L3) des parois latérales (203, 204, 205, 206) de la partie formant boîte (253) dans la direction de l'axe longitudinal (251) est égale ou supérieure à l'épaisseur (L1+L2) d'une paroi supérieure ou d'une paroi supérieure (202) de la partie formant boîte (253).
